# EUROPEAN PATENT APPLICATION

(11) **EP 4 386 894 A1**
(43) Date of publication of application: **19.06.2024**
(21) Application number: 22855799.7
(22) Date of filing: 27.07.2022
(51) Int. Cl.: H01M 4/134, H01M 4/38, H01M 4/66, H01M 4/80, H01M 10/052, H01M 10/0568, H01M 10/0569

(54) **BATTERY**

(30) Priority: 10.08.2021 JP 2021130970
(71) Applicant: Panasonic Intellectual Property Management Co., Ltd., Kadoma-shi, Osaka 571-0057 (JP)
(72) Inventor: FUJIMOTO, Masahisa, Kadoma-shi, Osaka 571-0057 (JP); OTO, Takashi, Kadoma-shi, Osaka 571-0057 (JP)
(74) Representative: Novagraaf International SA
(86) International application number: PCT/JP2022/028979
(87) International publication number: WO 2023/017736

(57) **Abstract**

Battery (1000) according to the present disclosure includes first electrode (101), second electrode (103), and electrolytic solution (102). First electrode (101) includes a base material that is a porous body and an active material layer positioned on a surface of the base material. The active material layer contains Bi. The active material layer may contain Bi as a main component of an active material. In battery (1000), for example, first electrode (101) may be a negative electrode, and second electrode (102) may be a positive electrode.

## Description

### TECHNICAL FIELD

The present disclosure relates to a battery.

### BACKGROUND ART

In lithium secondary batteries that have been actively researched and developed in recent years, battery characteristics such as charge-discharge voltage, charge-discharge cycle life characteristics, and storage characteristics largely depend on an electrode to be used. Thus, an attempt to improve battery characteristics has been made by improving an electrode active material.

For example, lithium secondary batteries produced by using, as an electrode, aluminum, silicon, tin, or the like that is electrochemically alloyed with lithium during charging have been proposed for a long time. PTL 1 discloses a lithium secondary battery including: a negative electrode containing a negative electrode material composed of an alloy of silicon, tin, and a transition metal; a positive electrode; and an electrolyte.

PTL 2 discloses a lithium secondary battery including: a negative electrode produced by using a silicon thin membrane provided on a current collector as an active material; a positive electrode; and an electrolyte.

As the metal to be alloyed with lithium, bismuth (Bi) is exemplified. NPL 1 discloses a negative electrode produced by using a Bi powder and containing Bi as a negative electrode active material.

### Citation List

### Patent Literature

PTL 1: Japanese Patent No. 4898737
PTL 2: Japanese Patent No. 3733065

### Non-Patent Literature

NPL 1: Hiroyuki Yamaguchi, "Amorphous Polymeric Anode Materials from Poly(acrylic acid) and Metal Oxide for Lithium Ion Batteries", Mie University, Doctoral Dissertation, 2015

### SUMMARY OF THE INVENTION

The present disclosure provides a battery having improved cycle characteristics.

A battery of the present disclosure includes a first electrode, a second electrode, and an electrolytic solution, wherein the first electrode includes a base material that is a porous body, and an active material layer positioned on a surface of the base material, and the active material layer contains Bi.

According to the present disclosure, a battery having improved cycle characteristics can be provided.

### BRIEF DESCRIPTION OF THE DRAWINGS

Fig. 1 is a sectional view schematically illustrating a configuration example of a battery according to an exemplary embodiment of the present disclosure.
Fig. 2 is a partially enlarged sectional view schematically illustrating a configuration example of a first electrode in the battery according to the exemplary embodiment of the present disclosure.
Fig. 3 is a graph showing a relationship between the number of cycles and a discharge capacity density of test cells according to Example 1, Example 2, Reference Example 1, and Reference Example 2.
Fig. 4 is a graph showing a relationship between the number of cycles and a discharge capacity density of test cells according to Example 1 and Examples 3 to 7.

### DESCRIPTION OF EMBODIMENT

### (Knowledge underlying the present disclosure)

As described in the section of [BACKGROUND ART], in lithium secondary batteries, an attempt to improve battery characteristics has been made by improving an electrode active material.

When lithium metal is used as a negative electrode active material, a lithium secondary battery having high energy density per weight and volume is obtained. However, in the lithium secondary battery having such a configuration, lithium is deposited in a dendrite shape during charging. Since a part of the deposited lithium metal reacts with an electrolytic solution, there is a problem in that charge-discharge efficiency is low and cycle characteristics are poor.

To address the problem, use of carbon, particularly, use of graphite as a negative electrode has been proposed. In the negative electrode including carbon, charging and discharging are performed by insertion and desorption of lithium into and from carbon. In the negative electrode having such a configuration, lithium metal is not deposited in a dendrite shape in view of the charge-discharge mechanism. In addition, the lithium secondary battery that employs the negative electrode having such a configuration involves a topotactic reaction and thus has very good reversibility, and exhibits almost 100% of charge-discharge efficiency. For these reasons, a lithium secondary battery employing a negative electrode including carbon, particularly graphite, has been put into practical use. However, the theoretical capacity density of graphite is 372 mAh/g, which is about 1/10 of the theoretical capacity density of lithium metal of 3884 mAh/g. Therefore, the capacity density of the active material of the negative electrode including graphite is low. Further, since the actual capacity density of graphite has reached almost the theoretical capacity density, an increase in capacity of the negative electrode including graphite has reached a limit.

On the other hand, lithium secondary batteries produced by using, as an electrode, aluminum, silicon, tin, or the like to be electrochemically alloyed with lithium during charging have been proposed for a long time. The capacity density of the metal to be alloyed with lithium is much larger than the capacity density of graphite. In particular, the theoretical capacity density of silicon is large. Therefore, an electrode produced by using aluminum, silicon, tin, or the like to be alloyed with lithium is promising as a negative electrode for a battery exhibiting high capacity, and various secondary batteries including such an electrode as a negative electrode have been proposed (PTL 1).

However, the negative electrode produced by using the metal to be alloyed with lithium as described above expands when occluding lithium and contracts when releasing lithium. When such expansion and contraction are repeated in charging and discharging, the alloy itself as an electrode active material is pulverized due to the charging and discharging, and the current collecting characteristics of the negative electrode are deteriorated. As a result, sufficient cycle characteristics are not obtained. In order to remedy such drawbacks, the following several attempts have been made. For example, attempts have been made to deposit silicon on a current collector having a roughened surface by sputtering or vapor deposition, or to deposit tin on the current collector by electroplating (PTL 2). In these attempts, the active material, that is, the metal to be alloyed with lithium becomes a thin membrane to be in close contact with the current collector. Therefore, even when the negative electrode repeatedly expands and contracts due to occlusion and release of lithium, the current collecting property is hardly deteriorated.

However, when the active material is formed by sputtering or vapor deposition as described above, the production cost is high, which is not practical. It is practical to form the active material by electroplating at low production cost, but it is very difficult to perform electroplating with silicon. In addition, tin with which electroplating is easily performed has a problem of having poor discharge flatness, and thus is difficult to use as an electrode of a battery.

As the metal to be alloyed with lithium, bismuth (Bi) is also exemplified. Bi forms, together with lithium (Li), compounds of LiBi and Li₃Bi. There is almost no difference between the potential of LiBi and the potential of Li₃Bi. On the other hand, there are several compounds formed of tin having poor discharge flatness and lithium, and the potentials of such compounds are considerably different from each other. That is, unlike tin, Bi does not have a property that the potential is greatly different among a plurality of kinds of compounds formed by combination with lithium. For this reason, an electrode containing Bi as an active material has a flat potential and thus is excellent in discharge flatness. Therefore, an electrode containing Bi as an active material is considered to be suitable as an electrode of a battery.

However, Bi is poor in malleability and ductility, and is difficult to produce in the form of a metal plate or a metal foil, and the obtainable form is a small ball or a powder. Therefore, an electrode produced by applying a Bi powder onto a current collector has been studied as an electrode containing Bi as an active material. However, an electrode produced by using such a Bi powder is pulverized due to repeated charging and discharging, and current collecting characteristics are deteriorated. As a result, sufficient cycle characteristics are not obtained. For example, in NPL 1, an electrode containing Bi as an active material is produced by using a Bi powder and using polyvinylidene fluoride (PVdF) or polyimide (PI) as a binder. In NPL 1, a battery produced by using this electrode is charged and discharged. However, the results of an initial charge-discharge curve and cycle characteristics of the produced electrode are both very poor. Although the measurement is performed at a very low rate equivalent to 0.042 C, initial charge-discharge efficiency is low, and cycle degradation is severe, which are not practical. For the cycle degradation, NPL 1 states that it is considered that as the Bi active material expands at the time of Li insertion, and contracts at the time of Li desorption, the active material becomes finer, and as a result, an electron conduction path cannot be secured, and decrease in the capacity occurs.

The present inventors have focused on Bi not having a property that the potential is greatly different among a plurality of kinds of compounds formed with lithium, and excellent in discharge flatness as described above, and have intensively studied a battery capable of improving cycle characteristics. As a result, the present inventors have found that when Bi is formed as an active material on a surface of a porous base material, cycle characteristics of a battery are improved, and have completed the present disclosure.

### (Overview of one aspect according to the present disclosure)

A battery according to a first aspect of the present disclosure includes a first electrode, a second electrode, and an electrolytic solution, wherein the first electrode includes a base material that is a porous body, and an active material layer positioned on a surface of the base material, and the active material layer contains Bi.

The battery according to the first aspect includes an electrode including a base material that is a porous body and an active material layer containing Bi and positioned on a surface of the base material. Thus, the battery according to the first aspect has improved cycle characteristics.

In a second aspect of the present disclosure, for example, in the battery according to the first aspect, the active material layer may contain a Bi simple substance.

The battery according to the second aspect has a more enhanced capacity and improved cycle characteristics.

In a third aspect of the present disclosure, for example, in the battery according to the first or second aspect, the active material layer may contain the Bi as a main component of an active material.

The battery according to the third aspect has a more enhanced capacity and improved cycle characteristics.

In a fourth aspect of the present disclosure, for example, in the battery according to the third aspect, the active material layer may contain substantially only the Bi as the active material.

The battery according to the fourth aspect has a more enhanced capacity and improved cycle characteristics.

In a fifth aspect of the present disclosure, for example, in the battery according to any one of the first to fourth aspects, the active material layer may contain at least one selected from the group consisting of LiBi and Li₃Bi.

The battery according to the fifth aspect has a more enhanced capacity and improved cycle characteristics.

In a sixth aspect of the present disclosure, for example, in the battery according to any one of the first to fifth aspects, the base material may contain at least one selected from the group consisting of Cu and Ni.

The battery according to the sixth aspect has a more enhanced capacity and improved cycle characteristics.

In a seventh aspect of the present disclosure, for example, in the battery according to any one of the first to sixth aspects, the active material layer may be a plating layer.

The battery according to the seventh aspect has a more enhanced capacity and improved cycle characteristics.

In an eighth aspect of the present disclosure, for example, in the battery according to any one of the first to seventh aspects, the electrolytic solution may contain an aprotic solvent and a lithium salt dissolved in the aprotic solvent.

The battery according to the eighth aspect can achieve a lithium ion battery having an enhanced capacity and improved cycle characteristics.

In a ninth aspect of the present disclosure, for example, in the battery according to the eighth aspect, the aprotic solvent may contain at least one selected from the group consisting of vinylene carbonate and fluoroethylene carbonate.

The battery according to the ninth aspect has a more enhanced capacity and improved cycle characteristics.

In a tenth aspect of the present disclosure, for example, in the battery according to any one of the first to ninth aspects, the first electrode may be a negative electrode, and the second electrode may be a positive electrode.

The battery according to the tenth aspect has a more enhanced capacity and improved cycle characteristics.

### (Exemplary embodiment of the present disclosure)

Hereinafter, an exemplary embodiment of the present disclosure will be described with reference to the drawings. The following description is intended to provide a comprehensive or specific example. Numerical values, compositions, shapes, membrane thicknesses, electrical characteristics, structures of secondary batteries, and the like shown below are merely examples, and are not intended to limit the present disclosure.

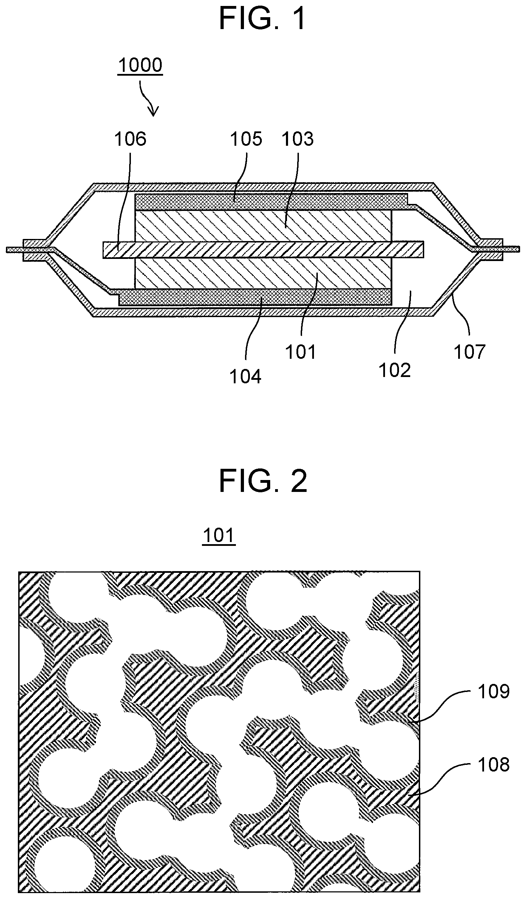

Fig. 1 is a sectional view schematically illustrating a configuration example of battery 1000 according to an exemplary embodiment of the present disclosure.

Battery 1000 includes first electrode 101, second electrode 103, and electrolytic solution 102. Fig. 2 is a partially enlarged sectional view schematically illustrating a configuration example of first electrode 101 in battery 1000 according to the exemplary embodiment of the present disclosure. As illustrated in Fig. 2, first electrode 101 includes base material 108 that is a porous body and active material layer 109 positioned on a surface of base material 108. Active material layer 109 contains Bi. Active material layer 109 contains, as Bi, a Bi simple substance, for example.

As illustrated in Fig. 1, battery 1000 according to the present exemplary embodiment may further include, for example, first current collector 104 in contact with first electrode 101. Battery 1000 according to the present exemplary embodiment may further include, for example, second current collector 105 in contact with second electrode 103. By providing first electrode 101 and second current collector 105, electricity can be extracted from battery 1000 with high efficiency.

Battery 1000 further includes, for example, separator 106 and exterior 107. Separator 106 is disposed between first electrode 101 and second electrode 103. First electrode 101 and second electrode 103 face each other in such a way that separator 106 is provided therebetween. First electrode 101, second electrode 103, separator 106, and electrolytic solution 102 are housed in exterior 107. Electrolytic solution 102 is, for example, an electrolytic solution with which first electrode 101, second electrode 103, and separator 106 are impregnated. The inner space of exterior 107 may be filled with electrolytic solution 102.

In battery 1000, in first electrode 101, active material layer 109 containing Bi is formed on a surface of base material 108 that is a porous body. Active material layer 109 is also formed on the inner wall of a hole of base material 108 as illustrated in Fig. 2, for example. Therefore, in battery 1000, regarding the area where the active material and the electrolytic solution can be in contact with each other, the area of active material layer 109 is larger when active material layer 109 is formed on the surface of base material 108 as a porous body than when active material layer 109 is formed on the surface of base material having a foil shape. Thus, battery 1000 according to the present exemplary embodiment can improve the capacity.

In first electrode 101 illustrated in Fig. 2, active material layer 109 is formed in a thin membrane shape on the inner wall of the hole of base material 108, and the hole is present in a state where the porosity is relatively high. However, first electrode 101 is not limited to this configuration. In first electrode 101, for example, active material layer 109 may substantially fill the inside of the hole of base material 108, and the porosity may be low. Even when first electrode 101 has such a structure, the boundary between base material 108 and active material layer 109 can be clearly confirmed, and it can be said that in first electrode 101, base material 108 is a porous body, and active material layer 109 is formed on a surface of base material 108. Active material layer 109 may be formed on a part or substantially all of the inner wall of a plurality of the holes.

Battery 1000 is, for example, a lithium secondary battery. Hereinafter, a case where metal ions occluded and released in active material layer 109 of first electrode 101 and second electrode 103 at the time of charging and discharging battery 1000 are lithium ions will be described As one example.

As described above, base material 108 is a porous body. In the present specification, the porous body means a structure including a plurality of holes and including open holes in which the holes are open to the outside. Examples of the porous body in the present specification include a mesh and a porous structure. The porous structure is a structure formed of a porous material including a plurality of pores, and the size of the pores is not particularly limited. Examples of the porous structure include foams. The porous structure may be a three-dimensional network structure in which pores communicate with each other. In the present specification, the "hole" includes, for example, both a hole in which an active material layer is filled and a hole in which an active material layer is not filled. That is, for example, a hole in which the active material layer is filled is also regarded as the "hole".

Base material 108 has, for example, conductivity. Base material 108 may be made of a conductive material such as metal or may be provided with a conductive membrane made of a conductive material on a surface of a porous body (for example, foamed resin) made of a non-conductive material such as resin, for example. Base material 108 may be, for example, a metal mesh and a porous metal. Base material 108 can function as a current collector of first electrode 101. That is, when first current collector 104 is provided, first current collector 104 and base material 108 function as current collectors of first electrode 101, for example. When first current collector 104 is not provided, base material 108 functions as a current collector of first electrode 101, for example.

Base material 108 may contain, for example, at least one selected from the group consisting of Cu and Ni. Base material 108 may be, for example, nickel mesh or porous nickel.

As described above, active material layer 109 contains a Bi simple substance. Active material layer 109 may contain Bi as a main component. Here, "active material layer 109 contains Bi as a main component" is defined as "the content of Bi in active material layer 109 is more than or equal to 50 mass%". The content of Bi in active material layer 109 can be obtained, for example, by confirming that Bi is contained in active material layer 109 by elemental analysis by energy dispersive X-ray analysis (EDX), and calculating the proportions of compounds contained in the active material layer by performing Rietveld analysis on the X-ray diffraction result of active material layer 109.

With the above-described configuration, improved charge-discharge cycle characteristics can be obtained.

Active material layer 109 containing Bi as a main component may be formed of, for example, Bi formed in a thin membrane shape (hereinafter, referred to as a "Bi thin membrane").

Active material layer 109 formed of the Bi thin membrane can be produced by, for example, electroplating. A method for producing first electrode 101 by producing active material layer 109 by electroplating is, for example, as follows.

First, a base material for electroplating is prepared. As the base material for electroplating, for example, a porous body that can constitute base material 108 when first electrode 101 is formed is used. As the base material for electroplating, for example, a metal mesh or a porous metal is used. As the base material for electroplating, for example, nickel mesh or porous nickel may also be used. The porous body used as the base material for electroplating is not particularly limited, as long as the porous body can constitute base material 108 when the first electrode is formed through processes such as electroplating and pressure treatment, and thus, the structure thereof may be appropriately selected depending on the intended structure of first electrode 101 without limitation. As one exampleAs one example, the porous body to be used as the base material for electroplating may have a specific surface area of, for example, from 0.014 m²/cm³ to 0.036 m²/cm³, inclusive.

As one example, a nickel mesh is prepared as the base material for electroplating. The nickel mesh is preliminarily degreased with an organic solvent, and then immersed in an acidic solvent to be degreased, whereby the surface of the nickel mesh is activated. The activated nickel mesh is connected to a power source so that a current can be applied thereto. The nickel mesh connected to the power source is immersed in a bismuth plating bath. As the bismuth plating bath, for example, an organic acid bath containing Bi³⁺ ions and an organic acid is used. Thereafter, the nickel mesh surface is electroplated with Bi by applying a current to the nickel under the control of the current density and the application time. After the electroplating, the nickel mesh is recovered from the plating bath, the masking is removed from the nickel mesh, and the nickel mesh is washed with pure water and dried. In this way, a Bi plating layer is produced on the nickel mesh surface. The bismuth plating bath used for producing the Bi plating layer is not particularly limited, and can be appropriately selected from known bismuth plating baths capable of depositing a Bi simple substance thin membrane. In the bismuth plating bath, an organic sulfonic acid bath, a gluconic acid and ethylenediaminetetraacetic acid (EDTA) bath, or a citric acid and EDTA bath may be used as the organic acid bath. For example, a sulfuric acid bath may be used as the bismuth plating bath. An additive may be added to the bismuth plating bath.

A Bi plating layer can be produced by the same method as described above also when porous nickel is used as the base material for electroplating, for example.

The active material formed of the Bi thin membrane has, for example, a density of from 6.0 g/cm³ to 9.8 g/cm³, inclusive. The density of the active material formed of the Bi thin membrane may be from 6.5 g/cm³ to 9.8 g/cm³, inclusive, or may be from 7.0 g/cm³ to 9.8 g/cm³, inclusive. The density of the active material formed of the Bi thin membrane can be determined, for example, by calculation using the Archimedes method. As one example, in a case where active material layer 109 is formed of a thin membrane substantially made of an active material, at least a part of the thin membrane is extracted as a sample, and the density of the sample is calculated by, for example, the Archimedes method, whereby the density of the active material is obtained.

Hereinafter, each configuration of battery 1000 of the present exemplary embodiment will be described in more detail by exemplifying a case where first electrode 101 is a negative electrode and second electrode 103 is a positive electrode.

### [First electrode]

As described above, first electrode 101 includes base material 108 that is a porous body and active material layer 109 positioned on a surface of base material 108. The configuration of base material 108 and active material layer 109 is as described above.

First electrode 101 functions as a negative electrode. Thus, active material layer 109 contains a negative electrode active material having a property of occluding and releasing lithium ions. Active material layer 109 contains Bi, and this Bi functions as a negative electrode active material.

Bi is a metal element to be alloyed with lithium. When the Bi functions as the negative electrode active material, Bi forms an alloy with lithium during charging, whereby lithium is occluded therein. That is, in active material layer 109, a lithium bismuth alloy is produced during charging of battery 1000. The lithium bismuth alloy to be produced contains, for example, at least one selected from the group consisting of LiBi and Li₃Bi. That is, during charging of battery 1000, active material layer 109 contains, for example, at least one selected from the group consisting of LiBi and Li₃Bi. During discharging of battery 1000, lithium is released from the lithium bismuth alloy, and the lithium bismuth alloy returns to Bi.

The Bi as the negative electrode active material reacts during charging and discharging of battery 1000, for example, as follows. The following reaction is an example of a case where the lithium bismuth alloy produced during charging is Li₃Bi.
Charge:

   Bi + 3Li⁺ + 3e' → Li₃Bi
Discharge:

   Li₃Bi → Bi + 3Li⁺ + 3e'

Active material layer 109 may contain substantially only Bi as an active material. In this case, battery 1000 can have an enhanced capacity and improved cycle characteristics. "Active material layer 109 contains substantially only Bi as an active material" means that, for example, in active materials contained in active material layer 109, an active material other than the Bi is less than or equal to 1 mass%. Active material layer 109 may contain only the Bi as an active material.

Active material layer 109 does not have to contain a solid electrolyte.

Active material layer 109 may be disposed in direct contact with the surface of base material 108. Further, when battery 1000 includes first current collector 104, base material 108 may be disposed in contact with first current collector 104.

Active material layer 109 may have a thin membrane shape.

Active material layer 109 may be a plating layer. Active material layer 109 may be a plating layer provided in direct contact with the surface of base material 108. That is, as described above, active material layer 109 may be a Bi plating layer formed on the surface of base material 108.

When active material layer 109 is a plating layer provided in direct contact with the surface of base material 108, active material layer 109 adheres firmly to base material 108. This makes it possible to further suppress deterioration, which occurs when active material layer 109 repeatedly expands and contracts, of the current collecting characteristics of first electrode 101. Thus, the charge-discharge characteristics of battery 1000 further improve. Further, when active material layer 109 is a plating layer, Bi to be alloyed with lithium is contained in active material layer 109 at a high density, so that a higher capacity can be achieved.

Active material layer 109 may contain a material other than Bi or an alloy containing Bi. Here, the alloy containing Bi is, for example, a lithium bismuth alloy (for example, LiBi and Li₃Bi) generated by a charge reaction.

Active material layer 109 may further contain a conductive material.

Examples of the conductive material include carbon materials, metals, inorganic compounds, and conductive polymers. Examples of the carbon material include graphite, acetylene black, carbon black, Ketjen black, carbon whisker, needle coke, and carbon fiber. Examples of the graphite include natural graphite and artificial graphite. Examples of the natural graphite include massive graphite and flake graphite. Examples of the metal include copper, nickel, aluminum, silver, and gold. Examples of the inorganic compound include tungsten carbide, titanium carbide, tantalum carbide, molybdenum carbide, titanium boride, and titanium nitride. These materials may be used singly or in combination of two or more.

Active material layer 109 may further contain a binder.

Examples of the binder include fluorine-containing resins, thermoplastic resins, ethylene propylene diene monomer (EPDM) rubber, sulfonated EPDM rubber, and natural butyl rubber (NBR). Examples of the fluorine-containing resin include polytetrafluoroethylene (PTFE), polyvinylidene fluoride (PVdF), and fluororubber. Examples of the thermoplastic resin include polypropylene and polyethylene. These materials may be used singly or in combination of two or more.

The thickness of active material layer 109 is not particularly limited, and may be, for example, from 0.1 µm to 100 µm, inclusive.

The material of base material 108 is, for example, a single metal or alloy. More specifically, the material may be a single metal or alloy containing at least one selected from the group consisting of copper, chromium, nickel, titanium, platinum, gold, aluminum, tungsten, iron, and molybdenum. Base material 100 may be stainless steel.

Base material 108 may contain nickel (Ni).

The structure of base material 108 is as described above. Base material 108 may be regarded as a current collector of first electrode 101 or a part of the current collector.

The thickness of first electrode 101 may be from 10 µm to 2000 µm, inclusive. That is, the entire thickness of base material 108 as a porous body provided with active material layer 109 on the surface may be from 10 µm to 2000 µm, inclusive. First electrode 101 having such a thickness enables the battery to operate at high output power.

### [First current collector]

In battery 1000 according to the present exemplary embodiment, first current collector 104 may be provided but does not have to be provided. First current collector 104 is provided, for example, in contact with first electrode 101. First current collector 104 is provided, for example, in contact with base material 108 of first electrode 101. By providing first current collector 104, electricity can be extracted from battery 1000 with high efficiency.

The material of first current collector 104 is, for example, a single metal or alloy. More specifically, the material may be a single metal or alloy containing at least one selected from the group consisting of copper, chromium, nickel, titanium, platinum, gold, aluminum, tungsten, iron, and molybdenum. First current collector 104 may be stainless steel.

First current collector 104 may contain nickel (Ni).

First current collector 104 may have a plate shape or a foil shape. From the viewpoint of easily ensuring high conductivity, first current collector 104 may be a metal foil. The thickness of first current collector 104 may be, for example, from 5 µm to 20 µm, inclusive.

First current collector 104 may be a layered membrane.

### [Electrolytic solution]

Electrolytic solution 102 contains, for example, an aprotic solvent and a lithium salt dissolved in the aprotic solvent.

The aprotic solvent is not particularly limited. Examples of the aprotic solvent include cyclic carbonate ester solvents, chain carbonate ester solvents, cyclic ether solvents, chain ether solvents, cyclic ester solvents, chain ester solvents, and fluorine solvents. Examples of the cyclic carbonate ester solvent include vinylene carbonate, fluoroethylene carbonate, ethylene carbonate, propylene carbonate, and butylene carbonate. Examples of the chain carbonate ester solvent include dimethyl carbonate, ethyl methyl carbonate, and diethyl carbonate. Examples of the cyclic ether solvent include tetrahydrofuran, 2-methyltetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorine solvent include methyl fluoropropionate, fluorobenzene, fluoroethyl methyl carbonate, and fluorodimethylene carbonate. Electrolytic solution 102 may contain one kind of solvent selected from these solvents, or may contain a mixture of two or more kinds of non-aqueous solvents selected from these solvents.

Electrolytic solution 102 may contain, as an aprotic solvent, at least one selected from the group consisting of vinylene carbonate and fluoroethylene carbonate. Since electrolytic solution 102 contains these solvents, battery 1000 has more improved cycle characteristics.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One kind of lithium salt selected from these may be used singly. Alternatively, a mixture of two or more kinds of lithium salts selected from these may be used.

### [Second electrode]

Second electrode 103 functions as a positive electrode. Second electrode 103 contains a material capable of occluding and releasing metal ions such as lithium ions. The material is, for example, a positive electrode active material.

Second electrode 103 contains a positive electrode active material.

Second electrode 103 may be disposed on a surface of second current collector 105 in direct contact with second current collector 105.

As the positive electrode active material, for example, a lithium-containing transition metal oxide, a transition metal fluoride, a polyanion material, a fluorinated polyanion material, a transition metal sulfide, a transition metal oxysulfide, a transition metal oxynitride, or the like can be used. Examples of the lithium-containing transition metal oxide include LiNi_{1-x-y}CoₓAl_{y}O₂((x + y) < 1), LiNi_{1-x-y}CoₓMn_{y}O₂((x + y) < 1), and LiCoO₂. In particular, when the lithium-containing transition metal oxide is used as the positive electrode active material, the production cost of the electrode can be reduced, and the average discharge voltage of the battery can be increased. The positive electrode active material may contain, for example, Li(Ni,Co,Mn)O₂.

Second electrode 103 may contain a solid electrolyte. As the solid electrolyte, a known solid electrolyte used for a lithium secondary battery can be used. For example, a halide solid electrolyte, a sulfide solid electrolyte, an oxide solid electrolyte, a polymer solid electrolyte, or a complex hydride solid electrolyte may be used.

The halide solid electrolyte means a solid electrolyte containing a halogen element. The halide solid electrolyte may contain not only a halogen element but also oxygen. The halide solid electrolyte does not contain sulfur (S).

The halide solid electrolyte may be, for example, a material represented by the following compositional formula (1).

Li_{α}M_{β}X_{γ} Formula (1)

Here, α, β, and γ are values larger than 0, M is at least one selected from the group consisting of metal elements other than Li and metalloid elements, and X is at least one selected from the group consisting of F, Cl, Br, and I.

The "metalloid element" is B, Si, Ge, As, Sb, and Te.

The "metal element" refers to all elements included in Groups 1 to 12 of the periodic table except hydrogen, and all elements included in Groups 13 to 16 except B, Si, Ge, As, Sb, Te, C, N, P, O, S, and Se. That is, the metal element is an element group that can be a cation when the element is combined with a halogen element to form an inorganic compound.

In the compositional formula (1), M may contain Y, and X may contain Cl and Br.

The sulfide solid electrolyte means a solid electrolyte containing sulfur (S). The sulfide solid electrolyte may contain not only sulfur but also a halogen element.

As the sulfide solid electrolyte, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂ can be used.

As the oxide solid electrolyte, for example, a NASICON-type solid electrolyte typified by LiTi₂(PO₄)₃ and an element-substituted compound thereof, a (LaLi)TiO₃-based perovskite-type solid electrolyte, a LISICON-type solid electrolyte typified by Li₁₄ZnGe₄O₁₆, Li₄SiO₄, LiGeO₄, and an element-substituted compound thereof, a garnet-type solid electrolyte typified by Li₇La₃Zr₂O₁₂ and an element-substituted compound thereof, Li₃PO₄ and an N-substituted compound thereof, and glass or glass ceramics in which Li₂SO₄, Li₂CO₃, or the like is added to a Li-B-O compound such as LiBO₂ and Li₃BO₃ as a base can be used.

As the polymer solid electrolyte, for example, a compound of a polymer compound and a lithium salt can be used. The polymer compound may have an ethylene oxide structure. The polymer compound having an ethylene oxide structure can contain a large amount of lithium salt. Therefore, ionic conductivity can be increased. As the lithium salt, LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), LiC(SO₂CF₃)₃, and the like can be used. One kind of lithium salt selected from the exemplified lithium salts can be used singly. Alternatively, a mixture of two or more kinds of lithium salts selected from the exemplified lithium salts can be used.

As the complex hydride solid electrolyte, for example, LiBH₄-LiI, LiBH₄-P₂S₅, and the like can be used.

The positive electrode active material may have a median diameter of from 0.1 µm to 100 µm, inclusive. When the positive electrode active material has a median diameter of more than or equal to 0.1 µm, the positive electrode active material and the solid electrolyte can form a good dispersion state. This improves the charge-discharge characteristics of the battery. When the positive electrode active material has a median diameter of less than or equal to 100 µm, a lithium diffusion rate is improved. This allows the battery to operate at high output power.

The positive electrode active material may have a median diameter larger than that of the solid electrolyte. As a result, the positive electrode active material and the solid electrolyte can form a good dispersion state.

From the viewpoint of the energy density and output of the battery, in second electrode 103, the ratio of the volume of the positive electrode active material to the total volume of the positive electrode active material and the solid electrolyte may be from 0.30 to 0.95, inclusive.

In order to prevent the solid electrolyte from reacting with the positive electrode active material, a coating layer may be formed on the surface of the positive electrode active material. This makes it possible to suppress an increase in reaction overvoltage of the battery. Examples of a coating material contained in the coating layer include sulfide solid electrolytes, oxide solid electrolytes, and halide solid electrolytes.

The thickness of second electrode 103 may be from 10 µm to 500 µm, inclusive. When the thickness of second electrode 103 is more than or equal to 10 µm, a sufficient energy density of the battery can be ensured. When the thickness of second electrode 103 is less than or equal to 500 µm, the battery can operate at high output power.

Second electrode 103 may contain a conductive material for the purpose of enhancing electron conductivity.

Second electrode 103 may contain a binder.

As the conductive material and the binder, the same materials as the materials that can be used for first electrode 101 may be used.

Second electrode 103 may contain a non-aqueous electrolytic solution, a gel electrolyte, or an ionic liquid for the purpose of facilitating transfer of lithium ions and improving the output characteristics of the battery.

The non-aqueous electrolytic solution contains a non-aqueous solvent, and a lithium salt dissolved in the non-aqueous solvent. Examples of the non-aqueous solvent and the lithium salt are the same as the examples of the solvent and the lithium salt exemplified in the description of the electrolytic solution. The concentration of the lithium salt ranges, for example, from 0.5 mol/liter to 2 mol/liter, inclusive.

As the gel electrolyte, a polymer material impregnated with a non-aqueous electrolytic solution can be used. Examples of the polymer material include polyethylene oxide, polyacrylonitrile, polyvinylidene fluoride, polymethyl methacrylate, and polymers having an ethylene oxide bond.

Examples of the cation contained in the ionic liquid include: (i) aliphatic chain quaternary salts such as tetraalkylammonium or tetraalkylphosphonium; (ii) aliphatic cyclic ammoniums such as a pyrrolidinium, a morpholinium, an imidazolinium, a tetrahydropyrimidinium, piperazinium, or a piperidinium; and (iii) nitrogen-containing heterocyclic aromatic cations such as a pyridinium or an imidazolium.

Examples of the anion contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

### [Second current collector]

In battery 1000 according to the present exemplary embodiment, second current collector 105 may be provided but does not have to be provided. Second current collector 105 is provided, for example, in contact with second electrode 103. By providing second current collector 105, electricity can be extracted from battery 1000 with high efficiency.

The material of second current collector 105 is, for example, a single metal or alloy. More specifically, the material may be a single metal or alloy containing at least one selected from the group consisting of copper, chromium, nickel, titanium, platinum, gold, aluminum, tungsten, iron, and molybdenum. Second current collector 105 may be stainless steel.

Second current collector 105 may contain nickel (Ni).

Second current collector 105 may have a plate shape or a foil shape. From the viewpoint of easily ensuring high conductivity, second current collector 105 may be a metal foil. The thickness of second current collector 105 may be, for example, from 5 µm to 20 µm, inclusive.

### [Separator]

Separator 106 has lithium ion conductivity. The material of separator 106 is not particularly limited, as long as lithium ions are allowed to pass through the material. The material of separator 106 may be at least one selected from the group consisting of solid electrolytes, gel electrolytes, ion exchange resin membranes such as a lithium cation exchange resin, semipermeable membranes, and porous membranes. When separator 106 is made of these materials, the safety of battery 1000 can be sufficiently ensured. Examples of the solid electrolyte include sulfide solid electrolytes such as Li₂S-P₂S₅, and oxide solid electrolytes such as Li₇La₃Zr₂O₁₂ (LLZ). Examples of the gel electrolyte include gel electrolytes containing a fluororesin such as PVdF. Examples of the ion exchange resin membrane include cation exchange membranes and anion exchange membranes. Examples of the porous membrane include a porous membrane made of a polyolefin resin and a porous membrane made of glass paper obtained by weaving glass fibers into a nonwoven fabric.

### [Exterior]

Exterior 107 is made of, for example, a material obtained by laminating a metal foil such as an aluminum foil with a resin film such as a polyethylene terephthalate (PET) film. Exterior 107 may be a container made of resin or metal.

In the above description, the configuration example in which first electrode 101 is a negative electrode and second electrode 103 is a positive electrode has been described. However, first electrode 101 may be a positive electrode and second electrode 103 may be a negative electrode.

When first electrode 101 is a positive electrode and second electrode 103 is a negative electrode, active material layer 109 is a positive electrode active material layer. That is, Bi contained in active material layer 109 functions as a positive electrode active material. In this case, second electrode 103 as a negative electrode is formed of, for example, lithium metal.

Battery 1000 has a basic configuration including first electrode 101, electrolytic solution 102, and second electrode 103, and is sealed in a sealed container to prevent air and moisture from entering therein. Examples of the shape of battery 1000 include a coin shape, a cylindrical shape, a square shape, a sheet shape, a button shape, a flat shape, and a laminated shape.

### EXAMPLES

Hereinafter, the details of the present disclosure will be disclosed using examples and reference examples. The following examples are illustrative, and the present disclosure is not limited to only the following examples.

### (Example 1)

### <Production of first electrode>

As a pretreatment, nickel mesh (2 cm × 2 cm, thickness: 50 µm, "NI-318200" manufactured by Nilaco Corporation) was preliminarily degreased with an organic solvent, and then immersed in an acidic solvent to be degreased, whereby the nickel mesh surface was activated. Bismuth methanesulfonate as a soluble bismuth salt was added to 1.0 mol/L methanesulfonic acid so that the concentration of Bi³⁺ ions was 0.18 mol/L to produce a plating bath. The activated nickel mesh was connected to a power source so that a current was able to be applied thereto, and then immersed in the plating bath. Thereafter, one surface of the nickel mesh was electroplated with Bi so as to have a thickness of about 1 µm by controlling the current density to 2 A/dm². After the electroplating, the nickel mesh was recovered from the acidic bath, washed with pure water, and dried.

### <Production of test cell>

The first electrode was used as a working electrode. As a counter electrode, Li metal was used. The working electrode corresponds to a negative electrode of a secondary battery. The Li metal was doubly coated with a microporous separator (Celgard 3401, Asahi Kasei Corporation). As an electrolytic solution, a solution in which LiPF₆ was dissolved in vinylene carbonate (VC) at a concentration of 1.0 mol/L was prepared. A battery as a test cell of Example 1 was assembled using such a working electrode, a counter electrode, and an electrolytic solution. The test cell thus prepared is a monopolar test cell including a working electrode and a counter electrode, and is used to test the performance of one of electrodes in a secondary battery. Specifically, an electrode to be tested is used as the working electrode, and an appropriate active material in a sufficient amount to cover the reaction of the working electrode is used as the counter electrode. Since these test cells were used to test the performance of the first electrode as a negative electrode, a large excess of Li metal was used as the counter electrode as is usually used. The negative electrode, the performance of which has been tested using such a test cell, can be used as a secondary battery, for example, by being combined with a positive electrode containing a positive electrode active material as described in the above exemplary embodiment, for example, a transition metal oxide containing Li.

### <Charge-discharge cycle test>

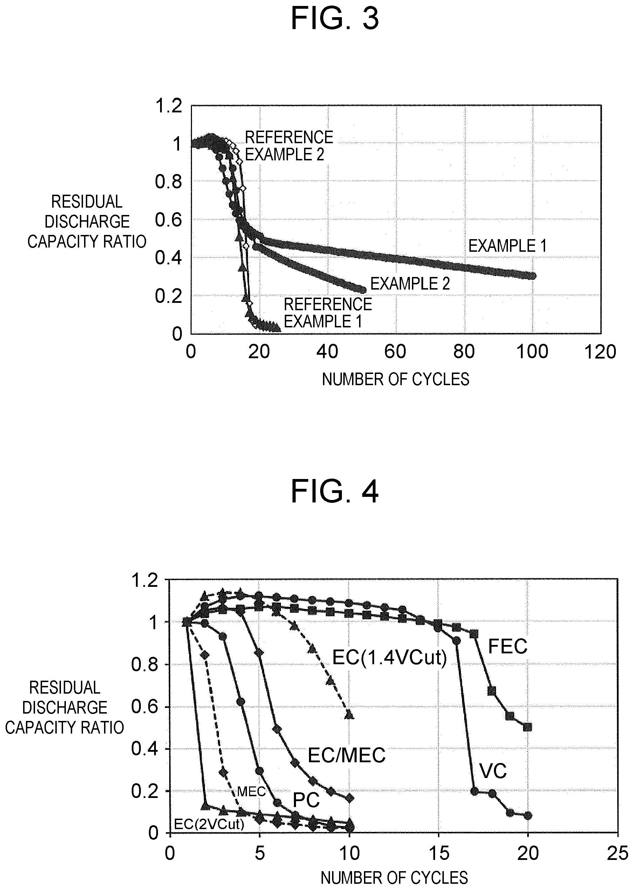

A charge-discharge cycle test was performed on the test cell. At a constant current value of 0.6 mA (0.15 mA/cm²)(corresponding to 0.5 IT), the test cell was charged up to 0 V, and discharged up to 2 V. The test cell was repeatedly charged and discharged with charging and discharging as one cycle, and cycle characteristics were evaluated. The charge-discharge cycle test was performed at 25°C. Fig. 3 is a graph showing a relationship between the number of cycles and the discharge capacity density of the test cell according to Example 1. In the cell of Example 1, the residual capacity ratio decreased to about 50% at the number of cycles of 20, but then gradually decreased, and the residual capacity ratio was maintained at about 30% even at the number of cycles of 100.

### (Example 2)

### <Production of first electrode>

As a pretreatment, porous nickel (2 cm × 2 cm, thickness: 1.6 mm, "NI-318161" manufactured by Nilaco Corporation) was preliminarily degreased with an organic solvent, and then immersed in an acidic solvent to be degreased, whereby the surface of porous nickel was activated. Bismuth methanesulfonate as a soluble bismuth salt was added to 1.0 mol/L methanesulfonic acid so that the concentration of Bi³⁺ ions was 0.18 mol/L to produce a plating bath. The activated porous nickel was connected to a power source so that a current can be applied thereto, and then immersed in the plating bath. Thereafter, the porous nickel surface was electroplated with Bi so as to have a thickness of about 1 µm by controlling the current density to 2 A/dm². After the electroplating, the porous nickel was recovered from the acidic bath, washed with pure water, and dried.

### <Production of test cell>

The first electrode of Example 2 was used as a working electrode. Except for this point, a test cell was produced in the same manner as in Example 1.

### <Charge-discharge cycle test>

A charge-discharge cycle test was performed on the test cell. The discharge test was performed in the same manner as in Example 1. Fig. 3 is a graph showing a relationship between the number of cycles and the discharge capacity density of the test cell according to Example 2. In the cell of Example 2, the residual capacity ratio decreased to about 50% at the number of cycles of 20, but then gradually decreased, and the residual capacity ratio was maintained at about 20% even at the number of cycles of 50.

### (Reference Example 1)

### <Production of first electrode>

As a pretreatment, a Ni foil was preliminarily degreased with an organic solvent, and then one surface thereof was masked and immersed in an acidic solvent to be degreased, whereby the surface of the Ni foil was activated. Bismuth methanesulfonate as a soluble bismuth salt was added to 1.0 mol/L methanesulfonic acid so that the concentration of Bi³⁺ ions was 0.18 mol/L to produce a plating bath. The activated copper foil was connected to a power source so that a current was able to applied thereto, and then immersed in the plating bath. Thereafter, the unmasked part of the Ni foil surface was electroplated with Bi so as to have a thickness of about 1 µm by controlling the current density to 2 A/dm². After electroplating, the Ni foil was recovered from the acidic bath, and the masking was removed from the Ni foil. Then, the Ni foil was washed with pure water, dried, and punched into a size of 2 cm × 2 cm to obtain a first electrode. That is, the first electrode of Reference Example 1 had a configuration in which an active material layer formed of a Bi plating layer was provided on a current collector formed of a Ni foil.

### <Production of test cell>

The first electrode of Reference Example 1 was used as a working electrode. Except for this point, a test cell was prepared in the same manner as in Example 1.

### <Charge-discharge cycle test>

A charge-discharge cycle test was performed on the test cell. The charge-discharge cycle test was performed in the same manner as in Example 1. Fig. 3 is a graph showing a relationship between the number of cycles and the discharge capacity density of the test cell according to Reference Example 1. In the cell of Reference Example 1, the residual capacity ratio significantly decreased at the number of cycles of 20.

### (Reference Example 2)

### <Production of first electrode>

A first electrode was produced in the same manner as in Reference Example 1 except that a Cu foil was used instead of the Ni foil.

### <Production of test cell>

The first electrode of Reference Example 2 was used as a working electrode. Except for this point, a test cell was prepared in the same manner as in Example 1.

### <Charge-discharge cycle test>

A charge-discharge cycle test was performed on the test cell. The charge-discharge cycle test was performed in the same manner as in Example 1. Fig. 3 is a graph showing a relationship between the number of cycles and the discharge capacity density of the test cell according to Reference Example 2. In the cell of Reference Example 2, the residual capacity ratio significantly decreased at the number of cycles of 20.

### (Example 3)

### <Production of test cell>

A test cell was produced in the same manner as in Example 1 except that the solvent of the electrolytic solution was changed from vinylene carbonate (VC) to fluoroethylene carbonate (FEC).

### <Charge-discharge cycle test>

Using the test cell of Example 3, a charge-discharge cycle test was performed in the same manner as in Example 1. However, the constant current value was changed to 0.05 mA. A charge-discharge cycle test was also performed on the test cell of Example 1 under the same conditions. Fig. 4 is a graph showing a relationship between the number of cycles and the discharge capacity density of the test cells of Example 1 and Example 3. As shown in Fig. 4, when FEC was used as a solvent, better cycle characteristics than VC were obtained.

### (Example 4)

### <Production of test cell>

A test cell was produced in the same manner as in Example 1 except that the solvent of the electrolytic solution was changed from vinylene carbonate (VC) to ethylene carbonate (EC).

### <Charge-discharge cycle test>

Using the test cell of Example 4, a charge-discharge cycle test was performed in the same manner as in Example 1. However, the constant current value was changed to 0.05 mA. In this Example, a charge-discharge cycle test was also performed, and the test cell was discharged up to 1.4 V. Fig. 4 is a graph showing a relationship between the number of cycles and the discharge capacity density of the test cell according to Example 4.

### (Example 5)

### <Production of test cell>

A test cell was produced in the same manner as in Example 1 except that the solvent of the electrolytic solution was changed from vinylene carbonate (VC) to propylene carbonate (PC).

### <Charge-discharge cycle test>

Using the test cell of Example 5, a charge-discharge cycle test was performed in the same manner as in Example 1. However, the constant current value was changed to 0.05 mA. Fig. 4 is a graph showing a relationship between the number of cycles and the discharge capacity density of the test cell according to Example 5.

### (Example 6)

### <Production of test cell>

A test cell was produced in the same manner as in Example 1 except that the solvent of the electrolytic solution was changed from vinylene carbonate (VC) to methylethyl carbonate (MEC).

### <Charge-discharge cycle test>

Using the test cell of Example 6, a charge-discharge cycle test was performed in the same manner as in Example 1. However, the constant current value was changed to 0.05 mA. Fig. 4 is a graph showing a relationship between the number of cycles and the discharge capacity density of the test cell according to Example 6.

### (Example 7)

### <Production of test cell>

A test cell was produced in the same manner as in Example 1 except that the solvent of the electrolytic solution was changed from vinylene carbonate (VC) to a mixed solvent of EC and MEC (EC : MEC = 1 : 1 (volume ratio)).

### <Charge-discharge cycle test>

Using the test cell of Example 7, a charge-discharge cycle test was performed in the same manner as in Example 1. The constant current value was changed to 0.05 mA, and the test cell was discharged up to 1.4 V. Fig. 4 is a graph showing a relationship between the number of cycles and the discharge capacity density of the test cell according to Example 7.

### INDUSTRIAL APPLICABILITY

The battery of the present disclosure may be used as, for example, a lithium secondary battery.

### REFERENCE MARKS IN THE DRAWINGS

- 1000: battery
- 101: first electrode
- 102: electrolytic solution
- 103: second electrode
- 104: first current collector
- 105: second current collector
- 106: separator
- 107: exterior
- 108: base material
- 109: active material layer

## Claims

1. A battery comprising:
a first electrode;
a second electrode; and
an electrolytic solution,
wherein
the first electrode comprises:
a base material that is a porous body; and
an active material layer positioned on a surface of the base material, and the active material layer contains Bi.

2. The battery according to Claim 1, wherein
the active material layer contains a Bi simple substance.

3. The battery according to Claim 1 or 2, wherein
the active material layer contains the Bi as a main component of an active material.

4. The battery according to Claim 3, wherein
the active material layer contains substantially only the Bi as the active material.

5. The battery according to any one of Claims 1 to 4, wherein
the active material layer contains at least one selected from the group consisting of LiBi and Li₃Bi.

6. The battery according to any one of Claims 1 to 5, wherein
the base material contains at least one selected from the group consisting of Cu and Ni.

7. The battery according to any one of Claims 1 to 6, wherein
the active material layer is a plating layer.

8. The battery according to any one of Claims 1 to 7, wherein
the electrolytic solution contains an aprotic solvent and a lithium salt dissolved in the aprotic solvent.

9. The battery according to Claim 8, wherein
the aprotic solvent contains at least one selected from the group consisting of vinylene carbonate and fluoroethylene carbonate.

10. The battery according to any one of Claims 1 to 9, wherein
the first electrode is a negative electrode, and
the second electrode is a positive electrode.
